# EUROPÄISCHE PATENTANMELDUNG

(11) **EP 3 287 476 A1**
(43) Veröffentlichungstag der Anmeldung: **28.02.2018**
(21) Anmeldenummer: 16185743.8
(22) Anmeldetag: 25.08.2016
(51) Int. Cl.: C08G 2/38, C08G 2/10, C08G 4/00, C08G 2/06, C08G 18/56

(54) **VERFAHREN ZUR HERSTELLUNG VON POLYOXYMETHYLEN-BLOCK-COPOLYMEREN**

(71) Anmelder: Covestro Deutschland AG, 51373 Leverkusen (DE)
(72) Erfinder: GÜRTLER, Christoph, 50735 Köln (DE); MÜLLER, Thomas Ernst, 52074 Aachen (DE); LEITNER, Walter, 52074 Aachen (DE); LEVEN, Matthias, 52062 Aachen (DE)
(74) Vertreter: Levpat

(57) **Zusammenfassung**

Die vorliegende Erfindung betrifft ein Verfahren zur Herstellung von Polyoxymethylen-BlockCopolymeren, umfassend den Schritt der Reaktion von Trioxan in Gegenwart einer polymeren Starterverbindung mit mindestens 2 Zerewitinoff-aktiven H-Atomen. Die Reaktion wird weiterhin in Gegenwart eines Oxids von Schwefel, Selen oder Phosphor, vorzugsweise Schwefeltrioxid-Dimethylformamid-Komplex, durchgeführt. Die Erfindung betrifft auch ein durch das erfindungsgemäße Verfahren erhältliches Polyol sowie daraus hergestellte Polyurethanpolymere. Bedingt durch die Molekülstruktur können teilkristalline Polyurethane erhalten werden.

## Beschreibung

Die vorliegende Erfindung betrifft ein Verfahren zur Herstellung von Polyoxymethylen-Block-Copolymeren, umfassend den Schritt der Reaktion von Trioxan in Gegenwart einer polymeren Starterverbindung mit mindestens 2 Zerewitinoff-aktiven H-Atomen. Sie betrifft weiterhin ein durch das erfindungsgemäße Verfahren erhältliches Polyol sowie daraus hergestellte Polyurethanpolymere.

Zum gegenwärtigen Zeitpunkt werden weltweit über 11 Millionen Tonnen Polyurethan pro Jahr produziert. Unter dem Aspekt einer nachhaltigeren Produktionsweise ist der Einsatz von zumindest teilweise aus nachwachsenden Rohstoffquellen stammenden Polyolen als Polyurethan-Rohstoffe erstrebenswert. Als C₁-Bausteine kommen insbesondere CO₂ und Formaldehyd in Frage. Diese sind nicht an die Verfügbarkeit von Erdöl gebunden und zudem preiswert.

Formaldehyd lässt sich zu Polyoxymethylen (POM) polymerisieren. Werden polymere Polyole als Starter verwendet, erhält man hierdurch Polyoxymethylen-Copolymere. Als Quellen für Formaldehyd dienen in der Regel gasförmiges Formaldehyd (monomer), Paraformaldehyd (polymer) und Trioxan (trimer). Die Reaktionsbedingungen der Polymerisation haben auch einen großen Einfluss auf die Struktur der so erhaltenen Block-Copolymere: die anionische Polymerisation von gasförmigem Formaldehyd in Gegenwart eines beispielsweise difunktionellen Starter-Polyols führt zu einer Triblock-Struktur, in der das Starter-Polyol zwei POM-Ketten trägt, welche den Abschluss des Block-Copolymers bilden.

Teilkristalline Polyurethane sind für die Entwicklung von Werkstoffen mit neuen Eigenschaften von Interesse. In teilkristallinen Kunststoffen lagern sich Abschnitte von Molekülketten in Bündeln aneinander, die Kristallite genannt werden und mehr oder weniger unregelmäßig in amorphe Bereiche eingestreut sind. Zwischen den kristallinen Bereichen sind die Moleküle lose geknäuelt. Ihre Festigkeit und Zähigkeit erhalten die teilkristallinen Kunststoffe durch die Kristallite. Die geknäuelten Bereiche geben ihnen Elastizität. Teilkristalline Thermoplaste sind zähfest und können durch Recken auf eine höhere Festigkeit verstreckt werden. Sie verhalten sich im Glaszustand ähnlich wie amorphe Thermoplaste.

Im Fall der Polyurethane werden die Hartgruppensegmente, welche die Kristallite bilden, durch Urethangruppen und POM-Einheiten gebildet. Weichgruppensegmente, beispielsweise in Form von Polyethereinheiten, führen zu amorphen Bereichen.

EP 0 048 338 A1 beschreibt oligomere Paraformaldehyd-Diole aus der Kopplung von Copolyether-Glykolsegmenten mit Formaldehyd. Das Copolyether-Glykol kann ein Copolymer von Tetrahydrofuran und Ethylenoxid oder Propylenoxid sein.

EP 2 311 887 A1 offenbart ein Verfahren zur kationischen Polymerisation oder Copolymerisation von Monomeren in Gegenwart eines Initiators, wobei die Polymerisation bei einer Temperatur im Bereich von 60 bis 180 °C und unter einem Druck im Bereich von 1 bis 100 bar durchgeführt wird und als Haupt-Monomeres Trioxan und Comonomere in einer Menge im Bereich von 0,1 bis 25 Gew.-%, bezogen auf das Gewicht der Gesamtmischung, eingesetzt werden. Der Initiator enthält mindestens eine Protonensäure und mindestens ein Salz einer Protonensäure und das molare Verhältnis von Protonensäure zu Salz liegt im Bereich von 1:0,01 bis 1:2000. Das Comonomer ist ausgewählt aus der Gruppe umfassend cyclische Acetale mit mindestens 2 benachbarten C-Atomen und 3 bis 9 Ringgliedern.

Schwefeltrioxid ist ein bekanntes Reagenz für die Sulfonierung von organischen Verbindungen. US 6,384,271 offenbart beispielsweise ein Verfahren, bei dem eine aromatische Verbindung mit einem SO₃-anorganischer Träger-Komplex kontaktiert wird. Die aromatische Verbindung weise keine Substituenten am Arylring auf oder aber enthält wenigstens eine Elektronendonorgruppe am Arylring. Der Komplex umfasst Schwefeltrioxid und einen anorganischen Träger ausgewählt aus der Gruppe der Zeolithe, Silicalite, Silica, Titansilicate, Borosilicate, Ton, Aluminophosphate oder deren Mischungen.

US 5,512,950 betrifft ein Verfahren zur Herstellung von Polyoxymethylen-Ethern, umfassend die Herstellung einer im Wesentlichen nichtwässrigen Lösung mit 60 bis 90 Gewichtsteilen einer Verbindung aus der Gruppe Formaldehyd und Formaldehydpolymere, gelöst in 40 bis 10 Gewichtsteilen eines gesättigten aliphatischen Alkohols mit 1 bis 3 Hydroxy-Radikalen. Zur Lösung wird als Katalysator konzentrierte Schwefelsäure hinzugefügt.

DE 1 198 558 A1 offenbart ein Verfahren zur Herstellung von hochmolekulare Polyoxymethylenen durch Polymerisation von Trioxan mittels Katalysatoren in Mengen von 1 10⁻⁴ bis 1 Mol-%, bezogen auf das eingesetzte Trioxan, bei Temperaturen von 50 bis 110 °C, gegebenenfalls in Gegenwart von Lösungsmitteln. Als Katalysatoren werden Schwefeltrioxid und/oder deren Komplexverbindungen mit cyclischen bzw. offenen Ethern oder mit Verbindungen von dreiwertigen Elementen der V. Hauptgruppe des Periodensystems verwendet.

Verfahren zur direkten Kettenverlängerung von Polyolen mit Hilfe der ringöffnenden Polymerisation von cyclischen Formaldehyd-Oligomeren führen in den bisher beschriebenen Verfahren nicht zu definierten Block-Copolymeren mit einheitlichen Kettenlängen im Bereich von 800-10000 Gramm pro Mol. Diese Eigenschaften sind jedoch für die vorgesehene Anwendung im Bereich der Polyurethan-Herstellung von großer Wichtigkeit. Die vorliegende Erfindung hat sich daher die Aufgabe gestellt, ein Verfahren bereitzustellen, bei dem solche Block-Copolymere ohne schwer abzutrennende Nebenprodukte und mit ausreichend hohem Einbau von Formaldehyd-Äquivalenten erhalten werden können.

Erfindungsgemäß gelöst wird die Aufgabe durch ein Verfahren zur Herstellung von Polyoxymethylen-Block-Copolymeren, umfassend den Schritt der Reaktion von 1,3,5-Trioxan, 1,3-Dioxan, 1,3-Dioxolan oder deren Mischungen in Gegenwart einer polymeren Starterverbindung mit mindestens 2 Zerewitinoff-aktiven H-Atomen, wobei die Reaktion weiterhin in Gegenwart eines Oxids von Schwefel, Selen oder Phosphor durchgeführt wird.

Überraschenderweise wurde gefunden, dass der Einsatz dieser Oxide zur selektiven Überführung von Polyolen im Sinne eines selektiven Kettenstarts genutzt werden. So kann die Homopolymerisation gleichzeitig eingesetzter Comonomere vermieden werden. Beispielsweise wird selektiv ein Polyetherpolyol-Starter aktiviert und die Reaktion des Oxids mit Trioxan unterbleibt. Die gemäß der vorliegenden Erfindung erzeugten Block-Copolymere verfügen vorzugsweise über Multiblock-Strukturen, in denen sich die Abfolge der Copolymerblöcke wiederholt, so dass sich die Eigenschaften der gewonnenen Polymere über die Wiederholungszahl der Formeleinheiten moderieren lässt. Der strukturelle Nachweis hierzu erfolgt durch kombinierte NMR- und GPC-Analytik. Insbesondere sind HMBC-NMR-Spektren aussagekräftig.

Im Sinne der vorliegenden Erfindung sind unter Oxymethylenpolyolen sowohl Oxymethylenpolyole mit einer Oxymethyleneinheit als auch Polyoxymethylenpolyole mit mindestens zwei direkt aufeinander folgenden Oxymethyleneinheiten zu verstehen.

Die erfindungsgemäß einzusetzenden Oxide von Schwefel, Selen oder Phosphor sind insbesondere Oxide dieser Elemente in ihren höchsten Oxidationsstufen. Ein weiterer Vorteil des erfindungsgemäßen Verfahrens ist, dass diese Oxide in substöchiometrischen Mengen, bezogen auf die Stoffmenge an Zerewitinoff-aktiven H-Atomen (insbesondere OH-Gruppen) der polymeren Starterverbindung eingesetzt werden können. Der substöchiometrische Einsatz der Oxide ist für die Bildung von Multiblock-Copolymeren vorteilhaft. Diese Multiblock-Copolymere können schematisch zum Beispiel die Struktur POM-Starter-POM-Starter-POM aufweisen.

Ohne sich auf eine Theorie festlegen zu wollen wird angenommen, dass diese Oxide eine anionische Spezies, im Fall von Polyolen beispielsweise ein OH⁻-Ion, aus der eingesetzten polymeren Starterverbindung abstrahieren und auf diese Weise eine kationische Starterverbindung generieren. Im Fall eines Polyetherpolyols kann auch eine Cyclisierung eintreten, wodurch ein Oxiranium-Kation als Endgruppe gebildet wird. Die so erzeugte Starterverbindung wird vom Trioxan, Dioxan oder Dioxolan angriffen und es kommt zur Bildung einer POM-Kette.

Mit Hilfe der vorliegenden Erfindung können Block-Copolymere unter Ausschluss einer konkurrierenden Homopolymerisation der verwendeten cyclischen Formaldehyd-Quellen erzeugt werden. So können reine Block-Copolymere aufgebaut werden, ohne dass Blends gebildet werden. Die Block-Copolymere weisen vorzugsweise eine definierte Kettenlänge mit einer Polydispersität von < 2,7 auf.

Die Herstellung von Polyoxymethylen-Block-Copolymeren zeichnet sich durch eine hohe Nachhaltigkeit aus. Die Polyoxymethylen-Block-Copolymere sind über terminale OH-Gruppen vernetzbar und können beispielsweise in der Herstellung von Beschichtungen, Schäumen, Dichtmassen, thermoplastischen Kunststoffen, duromeren Kunststoffen und Elastomeren verwendet werden.

Polyoxymethylen-Homopolymere sind typischerweise auf eine Funktionalität F ≤ 2 beschränkt. Über den Einsatz von Starterverbindungen mit einer Funktionalität F ≥ 2 (beispielsweise ≥ 3) ist im Gegensatz dazu der Zugang zu Polyoxymethylen-Block-Copolymeren mit einer Funktionalität F > 2 möglich.

Gegenüber Polyetherpolyolen gleichen Molekulargewichts ist der Anteil an Polyoxyalkylen-Einheiten, die aus den entsprechenden Alkylenoxiden hergestellt werden, um den Polyoxymethylen-Anteil verringert, was zu einer vorteilhaften Energiebilanz des Produktes führt. Physikalische Eigenschaften wie Glasübergangstemperaturen, Schmelzbereiche und Viskositäten können für ein gegebenes Molekulargewicht über die Länge der Polyoxymethylen-Blöcke im Verhältnis zu den Polyether-Blöcken gezielt angesteuert werden.

Bei den polymeren Starterverbindungen handelt es sich im Sinne der Erfindung um bi- oder höherfunktionelle Verbindungen mit einem zahlenmittleren Molekulargewicht von beispielsweise zwischen 100 und 3000 g/mol. Die Funktionalität wird über terminale oder entlang der Polymerkette angeordnete, Heteroatome enthaltende, abstrahierbare funktionelle Gruppen wie beispielsweise Hydroxygruppen oder Thiolgruppen hergestellt.

Als Lösungsmittel können beispielsweise Methanol oder höhere ein- oder mehrwertige Alkohole, unpolare organische Lösungsmittel wie z.B. lineare oder verzweigte Alkane oder Alkan-Gemische, Toluol, die verschiedenen Xylol-Isomere oder Gemische derselben, Mesitylen, ein oder mehrfach halogenierte Aromaten oder Alkane, offenkettige oder zyklische Ether wie z.B. Tetrahydrofuran (THF) oder Methyl-tert-butylether (MTBE), offenkettige oder zyklische Ester, oder polare aprotische Lösungsmittel wie z.B. 1,4-Dioxan, Acetonitril, N,N-Dimethylformamid (DMF), N,N-Dimethylacetamid, Dimethylsulfoxid (DMSO), zyklische Carbonate, z.B. Ethylencarbonat oder Propylencarbonat, N Methylpyrrolidon (NMP), Sulfolan, Tetramethylharnstoff, N,N'-Dimethylethylenharnstoff oder Mischungen derselben untereinander, und/oder anderen Lösungsmitteln eingesetzt werden. Auch der Einsatz von flüssigem oder überkritischem Kohlendioxid als Lösungsmittel in Reinsubstanz oder als Gemisch mit einem der oben genannten Lösungsmittel ist möglich. Bevorzugt sind offenkettige oder zyklische Ether wie z.B. Tetrahydrofuran (THF) oder Methyl-tert-butylether (MTBE), offenkettige oder zyklische Ester, polare aprotische Lösungsmittel wie z.B. 1,4-Dioxan, Acetonitril, N,N-Dimethylformamid (DMF), N,N-Dimethylacetamid, Dimethylsulfoxid (DMSO), zyklische Carbonate, z.B. Ethylencarbonat oder Propylencarbonat, N Methylpyrrolidon (NMP), Sulfolan, Tetramethylharnstoff, N,N'-Dimethylethylenharnstoff oder Mischungen derselben untereinander und/oder anderen Lösungsmitteln sowie flüssiges oder überkritisches Kohlendioxid. Besonders bevorzugt ist die Reaktion in Abwesenheit von Lösungsmitteln.

Die Reaktion wird beispielsweise bei einer Temperatur zwischen 20 und 200 °C, bevorzugt zwischen 20 und 120 °C und besonders bevorzugt zwischen 40 und 120 °C durchgeführt. Die Reaktionszeit für die Polymerisation beträgt beispielsweise 0,05 bis 120 Stunden, bevorzugt 0,5 bis 48 Stunden, besonders bevorzugt 1 bis 24 Stunden.

Das bei der Herstellung der Polyoxymethylen-Block-Copolymere erhaltene Produkt kann ohne weitere Aufreinigungsschritte (abgesehen von eventuellen Filtrationen) in der Reaktion mit Isocyanaten zu Polyurethanen eingesetzt werden. Die weitere Umsetzung kann direkt in dem vorliegenden Reaktor (in situ) oder in einem zweiten Reaktor ohne vorherige Isolierung der Polyoxymethylen-Block-Copolymere erfolgen. Alternativ kann das Reaktionsgemisch zeitlich versetzt, z.B. nach Aufarbeitung, Reinigung, Umfüllen oder Lagerung, für die weitere Umsetzung verwendet werden. Bevorzugt werden für die weitere Umsetzung Produkte eingesetzt, bei denen die Polyoxymethylen-Block-Copolymere in Abwesenheit von Lösungsmitteln erhalten wurden.

Bei der Herstellung der erfindungsgemäßen Polyoxymethylen-Block-Copolymere in Anwesenheit von Lösungsmitteln kann vor der weiteren Umsetzung eine Entfernung der flüchtigen Komponenten, z.B. durch Vakuumdestillation oder Dünnschichtverdampfung, erfolgen. Zusätzliche Reinigungsschritte wie z.B. Extraktion, Fällung und/oder Filtration, z.B. zum Entfernen des Katalysators, sind ebenfalls eingeschlossen.

Ausführungsformen des erfindungsgemäßen Verfahrens werden nachfolgend beschrieben. Sie können beliebig miteinander kombiniert werden, sofern sich aus dem Kontext nicht eindeutig das Gegenteil ergibt.

In einer Ausführungsform des erfindungsgemäßen Verfahrens ist das Oxid P₂O₅ und/oder SO₃.

In einer weiteren Ausführungsform des erfindungsgemäßen Verfahrens wird die Reaktion mit einer Mischung aus 1,3,5-Trioxan und 1,3-Dioxolan durchgeführt. Durch den Einsatz von 1,3-Dioxolan als Comonomer können POM-Ketten besser vor Hydrolyse geschützt werden. Der hydrolytische Kettenabbau unterbleibt, sobald beispielsweise eine Oxyethylen-Endgruppe oder Oxypropylen-Endgruppe (aus dem Einbau von 1,3-Dioxolan oder 1,3-Dioxan stammend) vorliegt.

In einer weiteren Ausführungsform des erfindungsgemäßen Verfahrens wird die Reaktion weiterhin in Gegenwart eines Koordinationsliganden durchgeführt, welcher von 1,3,5-Trioxan, 1,3-Dioxan und 1,3-Dioxolan verschieden ist. Dieser von 1,3,5-Trioxan, 1,3-Dioxan und 1,3-Dioxolan verschiedene Koordinationsligand kann die Reaktivität des Oxids modifizieren und dessen Handhabung verbessern. Vorzugsweise ist der von 1,3,5-Trioxan, 1,3-Dioxan und 1,3-Dioxolan verschiedene Koordinationsligand *N,N*-Dimethylformamid. Besonders bevorzugt ist die Kombination von Schwefeltrioxid und *N,N*-Dimethylformamid.

In einer weiteren Ausführungsform des erfindungsgemäßen Verfahrens wird die Reaktion bei einer Temperatur von ≤ 70 °C durchgeführt. Bevorzugt sind Reaktionstemperaturen von ≥ 55 °C bis ≤ 65 °C.

In einer weiteren Ausführungsform des erfindungsgemäßen Verfahrens ist die polymere Starterverbindung ausgewählt aus der Gruppe der Polyetherpolyole, Polyesterpolyole, Polyetheresterpolyole, Polycarbonatpolyole und/oder Polyacrylatpolyole. Bevorzugt ist die Stoffklasse der Polyetherpolyole. Die Polyole können beispielsweise ein zahlenmittleres Molekulargewicht Mₙ von ≥ 62 g/mol bis ≤ 8000 g/mol, bevorzugt von ≥ 92 g/mol bis ≤ 5000 g/mol und mehr bevorzugt von ≥ 400 g/mol bis ≤ 2000 g/mol aufweisen.

Die durchschnittliche OH-Funktionalität der Polyole ist ≥ 2, beispielsweise in einem Bereich von > 2 bis ≤ 6, vorzugsweise von ≥ 2,0 bis ≤ 4 und mehr bevorzugt von ≥ 2,0 bis ≤ 3.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrin an di- oder polyfunktionelle Startermoleküle.

Geeignete Startermoleküle für die Polyetherpolyole sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Geeignete Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols > 2 ist, können zusätzlich auch Monocarbonsäuren wie beispielsweise Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie beispielsweise mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle für diese Polyetherpolyole sind zum Beispiel Diole mit zahlenmittleren Molekulargewichten Mn von vorzugsweise ≥ 18 g/mol bis ≤ 400 g/mol oder von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von ≥ 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 62 g/mol bis ≤ 400 g/mol oder von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropylmethacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

In einer weiteren Ausführungsform des erfindungsgemäßen Verfahrens ist die polymere Starterverbindung ein Polyol mit einer durchschnittlichen Hydroxyl-Funktionalität von ≥ 2,0 bis ≤ 2,2. Auf diese Weise erhält man difunktionelle Block-Copolymere, welche als Basis für die Herstellung von teilkristallinen thermoplastischen Polyurethanen dienen können.

In einer weiteren Ausführungsform des erfindungsgemäßen Verfahrens wird das nach der Reaktion erhaltene Produkt mit einer Base behandelt. Neben einer Desaktivierung des eingesetzten Oxids erfolgt durch die Basenzugabe auch ein Abbau von endständigen POM-Ketten, bis ein hydrolysefesterer Polymerblock erreicht wird. Wässrige Base ist hierbei bevorzugt. Diese Variante ist insbesondere in Kombination mit den zuvor erwähnten cyclischen Acetalen wie 1,3-Dioxolan und 1,3-Dioxan von Vorteil.

Bevorzugte Mengenverhältnisse für das erfindungsgemäße Verfahren sind:
Polymere Starterverbindung: 1 Äquivalent
Trioxan: ≥ 5 bis ≤ 10 Äquivalente
Dioxolan: ≥ 5 bis ≤ 10 Äquivalente
Oxid von Schwefel, Selen oder Phosphor: ≥ 0,5 bis ≤ 1,0 Äquivalente

Besonders bevorzugt sind:
Difunktionelles Polyetherpolyol: 1 Äquivalent
Trioxan: ≥ 5 bis ≤ 10 Äquivalente
Dioxolan: ≥ 5 bis ≤ 10 Äquivalente
SO₃·Dimethylformamid-Komplex: ≥ 0,5 bis ≤1,0 Äquivalente

Die vorliegende Erfindung betrifft ebenfalls ein Polyoxymethylen-Block-Copolymer, erhältlich durch ein erfindungsgemäßes Verfahren, mit einem zahlenmittleren Molekulargewicht Mₙ von ≥ 800 g/mol bis ≤ 15000 g/mol. Das zahlenmittlere Molekulargewicht lässt sich beispielsweise per GPC gegen Polypropylenglykol-Standards bestimmen. Bevorzugt ist ein zahlenmittleres Molekulargewicht Mₙ von ≥ 6000 g/mol bis ≤ 14000 g/mol.

In einer Ausführungsform des erfindungsgemäßen Polyoxymethylen-Block-Copolymers macht die zur Herstellung des Polyols eingesetzte polymere Starterverbindung ≥ 20 Gewichts-% bis ≤ 80 Gewichts-% des Polyols aus. Vorzugsweise liegt dieser Gehalt, bezogen auf das Gesamtgewicht des Polyols, bei ≥ 40 Gewichts-% bis ≤ 60 Gewichts-% und besonders bevorzugt bei ≥ 45 Gewichts-% bis ≤ 65 Gewichts-%.

In einer weiteren Ausführungsform des erfindungsgemäßen Polyoxymethylen-Block-Copolymers weist dieses einen Polydispersitätsindex M_{w}/Mₙ von ≤ 2,7 auf. Vorzugsweise liegt der Polydispersitätsindex in einem Bereich von > 1,0 bis ≤ 2,6.

Ein weiterer Aspekt der vorliegenden Erfindung ist ein Polyurethanpolymer, erhältlich durch Reaktion einer Polyolkomponente umfassend ein erfindungsgemäßes Polyoxymethylen-Block-Copolymer mit einem Polyisocyanat. Vorzugsweise beträgt der Gehalt an Polyoxymethylengruppen ≥ 10 Gewichts-%. Bevorzugt ist ein Gehalt von ≥ 10 Gewichts-% bis ≤ 35 Gewichts-%, mehr bevorzugt ≥ 15 Gewichts-% bis ≤ 50 Gewichts-%. Der Gehalt an Polyoxymethylengruppen im Polyurethan lässt sich am einfachsten aus der Massenbilanz an Trioxan bei der Herstellung des Block-Copolymers, welches zur Herstellung des Polyurethans verwendet wurde, ermitteln. Selbstverständlich kann die Polyolkomponente auch weitere Polyole beinhalten. Der Gehalt des Polyoxymethylen-Copolymers in der Polyolkomponente und der Gehalt an Polyoxymethylengruppen in dem Polyoxymethylen-Copolymer werden dann so gewählt, dass der erfindungsgemäß geforderte Gesamtgehalt an Polyoxymethylengruppen in der Polyolkomponente eingehalten wird.

Ohne auf eine Theorie festgelegt zu sein wird angenommen, dass erfindungsgemäße Polyurethane einen geringeren Brennwert als vergleichbare Polyurethane aufweisen, deren Polyolkomponente keine Polyoxymethylengruppen enthält. Die Verringerung des Brennwerts kann hierbei ohne den Zusatz von Additiven erreicht werden, die Einfluss auf Materialeigenschaften nehmen oder auch toxisch auf die menschliche Physiologie wirken können. Der Brennwert ist hierbei insbesondere als Brennwert nach DIN 51900, ausgedrückt in kJ/kg, zu verstehen.

Das Isocyanat kann ein aliphatisches oder aromatisches Di- oder Polyisocyanat sein. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das Isocyanat ein Prepolymer ist, welches erhältlich ist durch Reaktion eines Isocyanats mit einer NCO-Funktionalität von ≥ 2 und eines Polyoxymethylen-Block-Copolymersmit einem Molekulargewicht von ≥ 62 g/mol bis ≤ 8000 g/mol und OH-Funktionalitäten von ≥ 1,5 bis ≤ 6.

In einer Ausführungsform des erfindungsgemäßen Polyurethanpolymers weist das Polyoxymethylen-Block-Copolymer der Polyolkomponente eine durchschnittliche Hydroxyl-Funktionalität von ≥ 2,0 bis ≤ 2,2 auf. Wird solch eine Polyolkomponente enthaltend ein Polyoxymethylen-Block-Copolymer zur Herstellung des Polyurethans eingesetzt, lassen sich teilkristalline thermoplastische Polyurethane erhalten.

In einer weiteren Ausführungsform des erfindungsgemäßen Polyurethanpolymers weist dieses einen Brennwert nach DIN 51900 von ≤ 26000 kJ/kg auf. Bevorzugt ist ein Brennwert von ≤ 25000 kJ/kg, mehr bevorzugt ≤ 22000 kJ/kg.

### Beispiele

Die vorliegende Erfindung wird anhand der nachfolgenden Figuren und Beispiele näher erläutert, ohne jedoch darauf beschränkt zu sein.

FIG. 1 zeigt ein C/H-korreliertes NMR-Spektrum des Produktes aus Beispiel 2

FIG. 2 zeigt eine rheometrische Untersuchung des Produktes aus Beispiel 2

### Eingesetzte polymere Starterverbindungen

PET-1: PPG 1000: Polypropylenglykol, Mₙ = 1007 g/mol
PET-2: PEG 1000: Polyethylenglykol, Mₙ = 1000 g/mol
PET-3: PET 1004: Polypropylenglykol, Mₙ = 435 g/mol
PET-4: trifunktionelles Poly(oxypropylen)polyol (Produkt PET-1110 der Firma Covestro AG) mit einer OH-Zahl von 231 mg_{KOH}/g, woraus sich das zahlenmittlere Molekulargewicht Mₙ 728,6 g/mol ergibt.

### Beschreibuig der- Methoden

NMR-Spektroskopie: Die Messungen erfolgten auf einem Bruker AV400 (400 MHz); die Kalibrierung der chemischen Verschiebungen erfolgte relativ zum Lösungsmittelsignal (CDCl₃, δ = 7,26 ppm).

Der Gehalt an Polyoxymethylengruppen, Polypropylenoxidgruppen und Polyethylenoxidgruppen in der Polyolkomponente wurde mit Hilfe von ¹H-NMR Spektroskopie bestimmt. Die relativen Gehalte der einzelnen Inkremente wurden dabei über Integration der charakteristischen Protonensignale bestimmt. Charakteristische Signale der hergestellten Verbindungen sind dabei:
¹H NMR (300 MHz, CDCl₃) δ = 1.14 (m, 3H); 3.20-3.55 (m, 3H); 3.73 (s, 4H); 4.70-4.90 (m, 2H) ppm.
¹³C NMR (75 MHz, CDCl₃) δ = 17.4; 66.9-67.5; 75.5; 73.0; 88.0-95.5 ppm.

Über C/H-korrelierte 2D-NMR-Spektroskopie wurde ein zusätzlicher Beweis der Konnektivität der einzelnen Inkremente innerhalb der Polymerketten erbracht. So kann gezeigt werden, dass Polyoxymethylengruppen chemisch an die Polyethylenoxidgruppen und Polypropylenoxidgruppen der verwendeten polymeren Starterverbindungen gebunden sind.

Gel-Permeations-Chromatographie (GPC): Die Messungen erfolgten auf einem Agilent 1200 Series (G1310A Iso Pump, G1329A ALS, G1316A TCC, G1362A RID, G1365D MWD), Detektion über RID; Elutionsmittel: Tetrahydrofuran (GPC grade), Flussrate 1,0 ml/min; Säulenkombination: PSS SDV Vorsäule 8×50 mm (5 µm), 2× PSS SDV linear S 8×300 ml (5 µm). Polystyrolproben bekannter Molmasse der Firma "PSS Polymer Standards Service" wurden zur Kalibrierung verwendet. Als Messaufnahme- und Auswertungssoftware wurde das Programmpaket "PSS WinGPC Unity" verwendet. Die Aufnahme der GPC-Chromatogramme erfolgte in Anlehnung an DIN 55672-1.

Die OH-Zahl (Hydroxylzahl) wurde in Anlehnung an DIN 53240-2 bestimmt, wobei jedoch N-Methylpyrrolidon anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "mg_{KOH}/g" bezieht sich auf mg[KOH]/g[Polyol].

Thermogravimetrische Analysen (TGA) wurden auf einem Mettler Toledo TGA/DSC 1 durchgeführt. Es wurde zwischen 6 und 20 mg der zu vermessenden Probe mit einer Heizrate von 10 K/min von 25 °C auf 600 °C erhitzt und der relative Gewichtsverlust in Abhängigkeit von der Temperatur ermittelt. Als Auswertesoftware wurde STARe SW 11.00 verwendet. Zur Ermittlung der verschiedenen Zersetzungsstufen wurde, sofern nicht anders erwähnt, ein tangentielles Auswerteverfahren angewendet. Als Zersetzungstemperatur wird der "Midpoint" angegeben.

Rheologische Untersuchungen wurden auf einem Physica MCR 501 Rheometer der Fa. Anton Paar durchgeführt. Es wurde eine Kegel-Platte-Konfiguration mit einem Abstand von 50 µm gewählt (Messsystem DCP25). Für die Messung wurde jeweils eine Probe des erhaltenen Polymers (0,1 g) auf dem Rheometer untersucht. Die Bedingungen waren: ϕ = 0,5%, ω = 10/s, Heizrate: 10 °C/min, Temperaturbereich: -40 °C bis 100 °C. Der Schnittpunkt der Kurven für G' und G" wurde als Schmelzpunkt angesehen.

### Beispiel 1: Herstellung eines Polyoxymethylen-Block-Copolymers unter Einsatz von SO₃·DMF als Initiator (5,0 Äquivalente 1,3,5-Trioxan als Formaldehyd-Quelle)

245 Gramm des Diols PET-3 (0,563 mol, 1,0 Äq.), 167 Gramm 1,3-Dioxolan (2,252 mol, 4,0 Äq.) und 256 Gramm 1,3,5-Trioxan (2,815 mol, 5,0 Äq.) wurden unter inerten Bedingungen gemischt und auf 60 °C erhitzt. Nach Erreichen einer homogenen Lösung wurden 43 Gramm Schwefeltrioxid-Dimethylformamid-Komplex (0,282 mol, 0,5 Äq.) zugegeben und mit Hilfe eines Überkopfrührers gerührt. Nach drei Stunden Reaktionszeit wurde auf 30 °C abgekühlt und 57 Gramm Triethylamin (0,563 mol, 1,0 Äq.) und 10 Gramm Wasser zugesetzt. Nach fünfzehnminütigem Rühren der zähen Masse wurde in 3L einer gleichteiligen Mischung aus Dichlormethan und Tetrahydrofuran gelöst und über Filterpapier filtriert. Nach Entfernen der Lösemittel unter vermindertem Druck (10⁻² bar) wurden 597 Gramm des festen Block-Copolymers erhalten. Dies entspricht einer Ausbeute von 95,4%.

NMR-spektroskopische Analyse des gebildeten Produktes ergab einen Gehalt von 42 Gew.-% Polyoxymethylengruppen, 39 Gew.-% Polypropylenoxidgruppen und 19 Gew.-% Polyethylenoxidgruppen.

Das C-H-korrelierte NMR- (HMBC-) Spektrum zeigte die charakteristischen Kreuzsignale für direkte chemische Bindungen zwischen Polyoxymethylenblöcken und Polyetherblöcken.

Die Analyse mittels Gelpermeationschromatographie (GPC) ergab eine monomodale Molmassenverteilung mit Mₙ = 7794 g/mol, PDI = 2,6. Die monomodale Verteilung ist für eine einheitliche Verbindung charakteristisch; die Entstehung eines Blends mit Paraformaldehyd konnte somit ausgeschlossen werden.

Die Analyse mittels Thermogravimetry (TGA) ergab einen Zersetzungspunkt von > 200°C.

Die Untersuchung des erhaltenen Polymers auf dem Rheometer ergab sich einen Schmelzpunkt von 46 °C.

### Beispiel 2: Herstellung eines Polyoxymethylen-Block-Copolymers unter Einsatz von SO₃·DMF als Initiator (10,0 Äquivalente 1,3,5-Trioxan als Formaldehyd-Quelle)

245 Gramm des Diols PET-3 (0,563 mol, 1,0 Äq.), 167 Gramm 1,3-Dioxolan (2,252 mol, 4,0 Äq.) und 512 Gramm 1,3,5-Trioxan (5,630 mol, 10,0 Äq.) wurden unter inerten Bedingungen gemischt und auf 60 °C erhitzt. Nach Erreichen einer homogenen Lösung wurden 43 Gramm Schwefeltrioxid-Dimethylformamid-Komplex (0,282 mol, 0,5 Äq.) zugegeben und mit Hilfe eines Überkopfrührers gerührt. Nach drei Stunden Reaktionszeit wurde auf 30 °C abgekühlt und 57 Gramm Triethylamin (0,563 mol, 1,0 Äq.) und 10 Gramm Wasser (0,563 mol, 1,0 Äq.) zugesetzt. Nach fünfzehnminütigem Rühren der zähen Masse wurde in 3L einer gleichteiligen Mischung aus Dichlormethan und Tetrahydrofuran gelöst und über Celite filtriert. Nach Entfernen der Lösemittel unter vermindertem Druck (10⁻² bar) wurden 739 Gramm des festen Block-Copolymers erhalten. Dies entspricht einer Ausbeute von 80,0%.

NMR-spektroskopische Analyse des gebildeten Produktes ergab einen Gehalt von 29 Gew.-% Polyoxymethylengruppen, 61 Gew.-% Polypropylenoxidgruppen und 10 Gew.-% Polyethylenoxidgruppen.

Die Molekülstruktur kann durch die folgende Formel schematisch wiedergegeben werden:

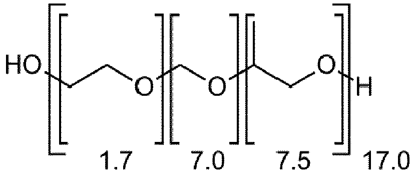

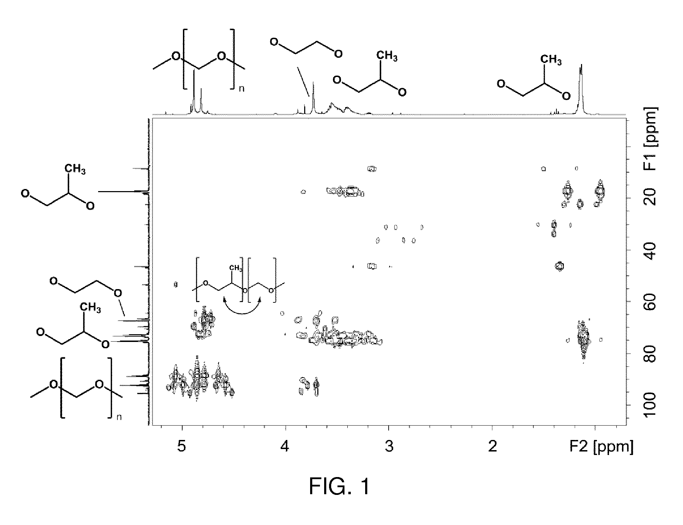

Das C-H-korrelierte NMR- (HMBC-) Spektrum zeigte die charakteristischen Kreuzsignale für direkte chemische Bindungen zwischen Polyoxymethylenblöcken und Polyetherblöcken. Das Spektrum ist in FIG. 1 wiedergegeben.

Die Analyse mittels Gelpermeationschromatographie (GPC) ergab eine monomodale Molmassenverteilung mit Mₙ = 12216 g/mol, PDI = 2,0. Die monomodale Verteilung ist für eine einheitliche Verbindung charakteristisch; die Entstehung eines Blends mit Paraformaldehyd konnte somit ausgeschlossen werden.

Die Bestimmung der OH-Zahl ergab einen Wert von 10,3 mg KOH/g.

Die Analyse mittels Thermogravimetry (TGA) ergab einen Zersetzungspunkt von > 110°C.

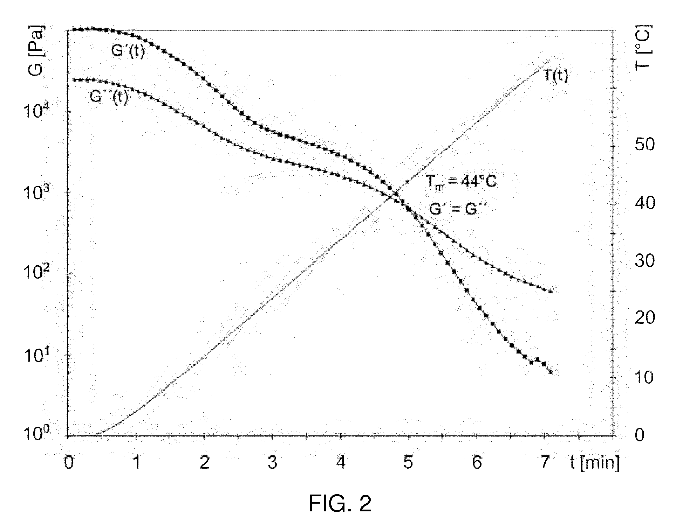

Eine Probe des erhaltenen Polymers wurde auf dem Rheometer untersucht. FIG. 2 gibt die Abhängigkeit von Speichermodul G' und Verlustmodul G" von der Temperatur wieder. Aus dem Schnittpunkt der Kurven für G' und G" ergab sich ein Schmelzpunkt der Probe von 44 °C.

### Beispiel 3: Herstellung eines Polyoxymethylen-Block-Copolymers unter Einsatz von P₂O₅ als Initiator

In einem inertisierten Schlenk-Kolben wurden unter Schutzgasatmosphäre 5,00 g 1,3,5-Trioxan (55,506 mmol, 6,0 Äq.) zusammen mit 4,02 g Polypropylenglykol PET-3 (9,251 mmol, 1,0 Äq.) und 4,11 g 1,3-Dioxolan (37,00 mmol, 4,0 Äq.) gelöst. Die Mischung wurde auf 60 °C erhitzt und 0,66 g Phosphorpentoxid (4,626 mmol, 0,5 Äq.) wurden unter Rühren zugegeben. Nach zweieinhalbstündiger Reaktionszeit bei 60 C wurden 0,08 ml vollentionisiertes Wasser zugegeben (4,626 mmol, 0,5 Äq.) und das gebildete Rohprodukt mit Hilfe von ¹H-Magnetresonanzspektroskopie charakterisiert.

NMR-spektroskopische Analyse des gebildeten Produktes ergab einen Gehalt von 31 Gew.-% Polyoxymethylengruppen, 62 Gew.-% Polypropylenoxidgruppen und 7 Gew.-% Polyethylenoxidgruppen.

### Vergleichsbeispielgruppe 4: Herstellung von Polyoxymethylen-Block-Copolymeren unter Einsatz von Lewis-Säuren als Initiator und eines Monoisocyanates als Abfangreagenz

In einem Ofen getrockneten Glas-Vial mit Argon Zufuhr wurden unter Argon-Atmosphäre 1,824 g 1,3,5-Trioxan (10 Äq., 20,265 mmol) vorgelegt. 0,973 g des Polypropylenglykols PET-3 (1,0 Äq., 2,252 mmol) wurden zugegeben und auf 60 °C erhitzt. Unter mechanischem Schütteln mit einer Geschwindigkeit von 500 U/min wurden 3 mol-% (0,06, 8mmol) der auf katalytische Aktivität zu testenden Metallverbindung zugegeben. Nach dreistündiger Reaktionszeit wurden 20 mg der Reaktionsmischung unter inerten Bedingungen in 0,2 ml Chloroform-d gelöst. Es wurden 28 µl Paratoluylsulfonylisocyanat zugegeben und nach 15 minütiger Reaktionszeit mit Methanol-d₄ auf ein Volumen von 0,5 ml aufgefüllt. Die Aufpolymerisation von Formaldehyd wurde anschließend mit Hilfe von ¹H-Magnetresonanzspektroskopie quantifiziert.

Man erhielt die folgenden Ergebnisse:

| Nr. | Initiator | Molekulargewicht | m | Anteil an Polyoxymethylengruppen in der Polyolkomponente | |
|---|---|---|---|---|---|
| | | [g/mol] | [mg] | [Mol.-%] | [Gew.-%] |
| 4-1 | Mo(acac)₂O₂ | 326,15 | 22 | 14 | 7 |
| 4-2 | MoCp₂Cl₂ | 297,03 | 20 | 10 | 5 |
| 4-3 | ZrCp₂Cl₂ | 292,32 | 20 | 10 | 5 |
| 4-4 | TiCp₂OTf₂ | 248,96 | 17 | 0 | 0 |
| 4-5 | HfCp₂Cl₂ | 379,58 | 26 | 0 | 0 |
| 4-6 | Bi-(III)-2-Ethylhexanoat | 1227,71 | 83 | 17 | 9 |
| 4-7 | BiOTf₃ | 656,19 | 45 | 0 | 0 |
| 4-8 | ZnOTf₂ | 363,53 | 25 | 0 | 0 |
| 4-9 | ScOTf₃ | 492,16 | 33 | 0 | 0 |
| 4-10 | HfOTf₄ | 774,76 | 53 | 15 | 8 |
| 4-11 | SnOTf₂ | 416,83 | 28 | 17 | 9 |
| 4-12 | TiCp₂Cl₂ | 248,98 | 17 | 4 | 2 |

### Vergleichsbeispiel 5: Herstellung eines Polyoxymethylen-Block-Copolymers unter Einsatz von Titantetrachlorid als Initiator

In einem inertisierten Reaktionsgefäß wurden unter Argon-Atmosphäre 0,973 g des Polypropylenglykols PET-3 (1 Äq., 2,252 mmol) vorgelegt. Titantetrachlorid (0,1 Äq., 0,03 ml, 0,225 mmol) wurde vorsichtig unter Rühren zugegeben. Anschließend wurden 0,912 g 1,3,5-Trioxan (5 Äq., 10,133 mmol) zugesetzt und der Ansatz wurde auf 60 °C erhitzt. Nach Erreichen der Schmelztemperatur wurden 0,629 ml 1,3-Dioxolan (4 Äq., 9,008 mmol) zugegeben und die Temperatur auf 80 °C erhöht. Nach zweistündigem Rühren bei dieser Temperatur wurde der Ansatz auf Raumtemperatur gekühlt. Es wurden 0,1 ml Triethylamin in 3 ml Dichlormethan zugegeben und über Filterpapier filtriert. Nach Einengen unter vermindertem Druck wurde eine weiße viskose Suspension erhalten, die sich unter Abscheidung von weiterem Paraformaldehyd zersetzte.

### Vergleichsbeispiel 6: Herstellung eines Polyoxymethylen-Block-Copolymers unter Einsatz von Brønsted-Säure als Initiator

In einem inertisierten Zweihalskolben wurden unter Argon-Atmosphäre 7,653 g 1,3,5-Trioxan (17 Äq., 0,085 mol) vorgelegt. 2,175 g eines Polypropylenglykols mit einer durchschnittlichen molaren Masse von 435 g/mol (1 Äq., 0,005 mol) wurden zugegeben und auf 60 °C erhitzt. Nach Abkühlen auf Raumtemperatur wurden 44 µl Trifluormethansulfonsäure (0,1 Äq., 0,5 mmol) zugesetzt. Die Mischung wurde auf 50 °C erhitzt und 1,4 ml 1,3-Dioxolan (4 Äq., 0,02 mol) wurden zugegeben. Die Reaktionstemperatur wurde auf 60 °C angehoben und über vier Stunden gehalten. Die Mischung wurde in 50 ml Dichlormethan aufgenommen und mit 20 ml gesättigter Hydrogencarbonatlösung neutralisiert. Nach zweimaligem Waschen mit entionisiertem Wasser wurde die organische Phase über Natriumsulfat getrocknet und im Vakuum eingeengt. Nach Einengen unter vermindertem Druck wurde eine weiße viskose Suspension erhalten, die sich unter Abscheidung von weiterem Paraformaldehyd zersetzte.

### Vergleich

Die nachfolgende Tabelle zeigt einen Vergleich der erhaltenen Ergebnisse aus den Beispielen 1 bis 3 im Vergleich zu den Vergleichsbeispielen 4-1 bis 6.

| Beispiel | Initator | Stabilisierungsreagenz | Anteil an Polyoxymethylengruppen in der Polyolkomponente [Gew.-%] | T_{d}[°C] |
|---|---|---|---|---|
| 1 | SO₃ DMF | Dioxolan | 42 | > 200 |
| 2 | SO₃ DMF | Dioxolan | 29 | 110 |
| 3 | P₂O₅ | Dioxolan | 31 | n.b. |
| 4-1 bis 4-12 (Vgl.) | Lewis Säuren | Paratoluylsulfonylisocyanat | 0 bis 9 | n.b. |
| 5 (Vgl.) | TiCl₄ | Dioxolan | Bildung Paraformaldehyd | Produkt nicht stabil |
| 6 (Vgl.) | Trifluormethansulfonsäure | Dioxolan | Bildung Paraformaldehyd | Produkt nicht stabil |

| | | | | |
|---|---|---|---|---|
| n.b. nicht bestimmt | | | | |

Ein Vergleich von Beispielen 1 bis 3 mit dem Vergleichsbeispielen 4-1 bis 6 belegt, dass bei Verwendung der Oxide von Schwefel oder Phosphor als Initiator (Beispiele 1 bis 3) die erfindungsgemäßen Polyoxymethylen-Block-Copolymere erhalten werden, während bei Verwendung von Lewis-sauren Verbindungen als Initiator (Vergleichsbeispiele 4-1 bis 4-12) nur geringe Anteile an Formaldehyd eingebaut werden und bei Verwendung von TiCl₄ oder Brønstedsauren Verbindungen (Vergleichsbeispiele 5 und 6) als Initiator Paraformaldehyd und keine reinen Polyoxymethylen-Block-Copolymere erhalten werden.

### Beispielgruppe 7: Herstellung von Polyoxymethylen-Block-Copolymeren unter Einsatz von SO₃·DMF als Initiator unter Variation der polymeren Starterverbindung

Analog zur Vorgehensweise in Beispiel 2 wurden die polymeren Starterverbindungen und die eingesetzten Äquivalente an Trioxan variiert. Die Menge an 1,3-Dioxolan betrug jeweils 4 Äquivalente, an SO₃-Dimethylformamid-Komplex jeweils 1,0 Äquivalente. Abweichend vom üblichen Vorgehen wurde in Beispiel 4 die polymeren Starterverbindung in 3 mL Isooctan gelöst eingesetzt. Man erhielt die folgenden Ergebnisse:

| Nr. | Polymere Starter verbindung | | Äq. Trioxan | Anteil an Polyoxymethylen gruppen in der Polyolkomponente | Anteil an Polyethergruppen in der Polyolkomponente | Mₙ |
|---|---|---|---|---|---|---|
| | | [mmol] | | [Gew.-%] | [Gew.-%] | [g/mol] |
| 7-1 | PET-1 | 2,252 | 10 | 15 | 6 | 13035 |
| 7-2 | PET-2 | 2,252 | 10 | 22 | 12 | 8634 |
| 7-3 | PET-3 | 2,252 | 10 | 30 | 11 | 8399 |
| 7-4 | PET-3 | 4,504 | 5 | 31 | 13 | 7931 |

Beim Copolymer aus Beispiel 7-4 wurde ein Schmelzpunkt von 59 °C ermittelt.

### Beispiel 8: Herstellung eines Polyoxymethylen-Block-Copolymers unter Einsatz von SO₃·DMF als Initiator und Polyethylenglykol als polymere Starterverbindung,

14,10 g Polyethylenglykol PET-2 (1000 g/mol, 14,100 mmol, 1,0 Äq.), 6,34 g 1,3,5-Trioxan (70,380 mmol, 5,0 Äq.) und 3,93 ml 1,3-Dioxolan (56,300 mmol, 4,0 Äq.) wurden unter inerten Bedingungen auf 60 °C erhitzt. Anschließend wurden unter starkem Rühren 1,08 g SO₃-DMF-Komplex zugegeben und über zwei Stunden bei 60 °C gerührt. Die Reaktion wurde durch Zugabe von 1,95 ml Triethylamin (14,080 mmol, 1,0 Äq.) und 0,25 ml vollentionisiertem Wasser (14,080 mmol, 1,0 Äq.) beendet. Die rohe Mischung wurde in 25 ml Dichlormethan aufgenommen und über Filterpapier filtriert. Das gebildete Rohprodukt wurde anschließend mit Hilfe von ¹H-Magnetresonanzspektroskopie charakterisiert.

NMR-spektroskopische Analyse des gebildeten Produktes ergab einen Gehalt von 49 Gew.-% Polyoxymethylengruppen, 0 Gew.-% Polypropylenoxidgruppen und 51 Gew.-% Polyethylenoxidgruppen.

Das C-H-korrelierte NMR- (HMBC-) Spektrum zeigte die charakteristischen Kreuzsignale für direkte chemische Bindungen zwischen Polyoxymethylenblöcken und Polyetherblöcken.

Die Analyse mittels Gelpermeationschromatographie (GPC) ergab eine monomodale Molmassenverteilung mit Mₙ = 3510 g/mol, PDI = 1,5. Die monomodale Verteilung ist für eine einheitliche Verbindung charakteristisch; die Entstehung eines Blends mit Paraformaldehyd konnte somit ausgeschlossen werden.

Die Analyse mittels Thermogravimetry (TGA) ergab einen Zersetzungspunkt von ≥ 180°C.

Die Untersuchung des erhaltenen Polymers auf dem Rheometer ergab sich einen Schmelzpunkt von 24,4 °C.

### vergleich

Ein Vergleich der Beispiele 1 bis 3 und der Beispiele 7 bis 8 belegt, dass in der Herstellung der erfindungsgemäßen Polyoxymethylen-Block-Copolymere unterschiedliche polymere Starterverbindungen eingesetzt werden können.

## Patentansprüche

1. Verfahren zur Herstellung von Polyoxymethylen-Block-Copolymeren, umfassend den Schritt der Reaktion von 1,3,5-Trioxan, 1,3-Dioxan, 1,3-Dioxolan oder deren Mischungen in Gegenwart einer polymeren Starterverbindung mit mindestens 2 Zerewitinoff-aktiven H-Atomen,
**dadurch gekennzeichnet, dass**
die Reaktion weiterhin in Gegenwart eines Oxids von Schwefel, Selen oder Phosphor durchgeführt wird.

2. Verfahren gemäß Anspruch 1, wobei das Oxid P₂O₅ und/oder SO₃ ist.

3. Verfahren gemäß Anspruch 1 oder 2, wobei die Reaktion mit einer Mischung aus 1,3,5-Trioxan und 1,3-Dioxolan durchgeführt wird.

4. Verfahren gemäß einem der Ansprüche 1 bis 3, wobei die Reaktion weiterhin in Gegenwart eines Koordinationsliganden durchgeführt wird, welcher von 1,3,5-Trioxan, 1,3-Dioxan und 1,3-Dioxolan verschieden ist.

5. Verfahren gemäß Anspruch 4, wobei der von 1,3,5-Trioxan, 1,3-Dioxan und 1,3-Dioxolan verschiedene Koordinationsligand *N,N*-Dimethylformamid ist.

6. Verfahren gemäß einem der Ansprüche 1 bis 5, wobei die Reaktion bei einer Temperatur von ≤ 70 °C durchgeführt wird.

7. Verfahren gemäß einem der Ansprüche 1 bis 6, wobei die polymere Starterverbindung ausgewählt ist aus der Gruppe der Polyetherpolyole, Polyesterpolyole, Polyetheresterpolyole, Polycarbonatpolyole und/oder Polyacrylatpolyole.

8. Verfahren gemäß einem der Ansprüche 1 bis 7, wobei die polymere Starterverbindung ein Polyol mit einer durchschnittlichen Hydroxyl-Funktionalität von ≥ 2,0 bis ≤ 2,2 ist.

9. Verfahren gemäß einem der Ansprüche 1 bis 8, wobei das nach der Reaktion erhaltene Produkt mit einer Base behandelt wird.

10. Polyoxymethylen-Block-Copolymer, erhältlich durch ein Verfahren gemäß einem der Ansprüche 1 bis 9, mit einem zahlenmittleren Molekulargewicht Mₙ von ≥ 800 g/mol bis ≤ 15000 g/mol.

11. Polyoxymethylen-Block-Copolymer gemäß Anspruch 10, wobei die zur Herstellung des Polyols eingesetzte polymere Starterverbindung ≥ 20 Gewichts-% bis ≤ 80 Gewichts-% des Polyols ausmacht.

12. Polyoxymethylen-Block-Copolymer gemäß Anspruch 10 oder 11 mit einem Polydispersitätsindex von ≤ 2,7.

13. Polyurethanpolymer, erhältlich durch Reaktion einer Polyolkomponente umfassend ein Polyoxymethylen-Block-Copolymer gemäß einem der Ansprüche 1 bis 12 mit einem Polyisocyanat.

14. Polyurethanpolymer gemäß Anspruch 13, wobei das Polyoxymethylen-Block-Copolymer der Polyolkomponente eine durchschnittliche Hydroxyl-Funktionalität von ≥ 2,0 bis ≤ 2,2 aufweist.

15. Polyurethanpolymer gemäß Anspruch 13 oder 14 mit einem Brennwert nach DIN 51900 von ≤ 26000 kJ/kg.
